(19) Europäisches Patentamt / European Patent Office / Office européen des brevets

(11) **EP 3 097 692 B1**

(12) **FASCICULE DE BREVET EUROPEEN**

(45) Date de publication et mention de la délivrance du brevet:
**06.11.2019 Bulletin 2019/45**

(21) Numéro de dépôt: **14828206.4**

(22) Date de dépôt: **11.12.2014**

(51) Int Cl.:
*H04N 19/64* (2014.01)

(86) Numéro de dépôt international:
**PCT/FR2014/053293**

(87) Numéro de publication internationale:
**WO 2015/097358 (02.07.2015 Gazette 2015/26)**

(54) **PROCÉDÉ DE TRAITEMENT D'UNE SÉQUENCE D'IMAGES HOLOGRAPHIQUES, DISPOSITIFS, SIGNAUX, DISPOSITIFS ET PROGRAMME D'ORDINATEUR ASSOCIÉS**

VERFAHREN ZUM VERARBEITEN EINER FOLGE VON HOLOGRAFISCHEN BILDERN SOWIE ZUGEHÖRIGES COMPUTERPROGRAMM, VORRICHTUNGEN, SIGNALE UND VORRICHTUNGEN

METHOD FOR PROCESSING A SEQUENCE OF HOLOGRAPHIC IMAGES, AND ASSOCIATED COMPUTER PROGRAM, DEVICES, SIGNALS AND DEVICES.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2013 FR 1363362**

(43) Date de publication de la demande:
**30.11.2016 Bulletin 2016/48**

(73) Titulaire: **Orange**
**75015 Paris (FR)**

(72) Inventeurs:
• **GIOIA, Patrick**
**35530 Servon sur Vilaine (FR)**
• **VISWANATHAN, Kartik**
**35200 Rennes (FR)**

(74) Mandataire: **Plasseraud IP**
**66, rue de la Chaussée d'Antin**
**75440 Paris Cedex 09 (FR)**

(56) Documents cités:
**WO-A1-01/95016**

• **KARTIK VISWANATHAN ET AL: "Wavelet compression of digital holograms: Towards a view-dependent framework", PROCEEDINGS OF SPIE, vol. 8856, 26 septembre 2013 (2013-09-26), page 88561N, XP055145164, ISSN: 0277-786X, DOI: 10.1117/12.2027199**

• **Jingang Zhong ET AL: "Reconstruction of Digital Hologram by use of the Wavelet Transform", , 28 février 2011 (2011-02-28), XP055145173, DOI: 10.5772/15659 ISBN: 978-9-53-307227-2 Extrait de l'Internet: URL:http://cdn.intechopen.com/pdfs/13859.p df [extrait le 2014-10-08]**

• **A. SCHWERDTNER ET AL: "Large holographic displays for real-time applications", PROCEEDINGS OF SPIE, vol. 6912, 7 février 2008 (2008-02-07), pages 69120T-69120T-8, XP055145178, ISSN: 0277-786X, DOI: 10.1117/12.762589**

• **Stephan Reichelt ET AL: "Holographic 3-D Displays -Electro-holography within the Grasp of Commercialization", , 1 avril 2010 (2010-04-01), XP055149317, Extrait de l'Internet: URL:http://www.intechopen.com [extrait le 2014-10-28]**

• **YAMAGUCHI TAKESHI ET AL: "Real-time image plane full-color and full-parallax holographic video display system", OPTICAL ENGINEERING, SOC. OF PHOTO-OPTICAL INSTRUMENTATION ENGINEERS, BELLINGHAM, vol. 46, no. 12, 28 décembre 2007 (2007-12-28), pages 125801-1-126801-3, XP007904171, ISSN: 0091-3286, DOI: 10.1117/1.2823485**

- KARTIK VISWANATHAN ET AL: "Morlet Wavelet transformed holograms for numerical adaptive view-based reconstruction", PROCEEDINGS OF SPIE, vol. 9216, 19 septembre 2014 (2014-09-19), page 92160G, XP055149433, ISSN: 0277-786X, DOI: 10.1117/12.2061588
- YANG S ET AL: "A PROGRESSIVE VIEW-DEPENDENT TECHNIQUE FOR INTERACTIVE 3-D MESH TRANSMISSION", IEEE TRANSACTIONS ON CIRCUITS AND SYSTEMS FOR VIDEO TECHNOLOGY, IEEE SERVICE CENTER, PISCATAWAY, NJ, US, vol. 14, no. 11, 1 novembre 2004 (2004-11-01), pages 1249-1264, XP001211131, ISSN: 1051-8215, DOI: 10.1109/TCSVT.2004.835153

**Description**

## 1. Domaine de l'invention

Le domaine de l'invention est celui de l'holographie, en particulier de la génération d'une séquence d'images holographiques destinée à être transmise par l'intermédiaire d'un réseau de communication, puis restituée sur un écran d'un dispositif d'affichage holographique. L'holographie est une technologie prometteuse pour l'affichage de contenus audiovisuels en 3D à partir d'un dispositif d'affichage holographique.

Un des problèmes centraux concernant l'implémentation pratique d'un tel dispositif holographique est la taille considérable des données à transmettre et afficher. Une image holographique ou hologramme avec une qualité exploitable contient les informations de plusieurs milliers de perspectives d'une scène à un instant donné. Si l'on considère une séquence d'images ou séquence vidéo, cette quantité d'information doit être multipliée par le taux de rafraichissement, ce qui aboutit à des débits bien au-delà des capacités des réseaux actuels.

Les techniques de compression habituellement appliquées aux séquences d'images classiques peuvent être étendues et généralisées pour encoder des séquences holographiques ; cependant, la nature même des images holographiques empêche d'obtenir des résultats satisfaisants, puisque ces techniques sont généralement basées sur un découpage en bloc et des prédictions de mouvement ; les images holographiques quant à elles se présentent sous la forme de motifs de diffraction dont les variations sont très peu corrélées avec la scène 3D qu'elles représentent.

## 2. Présentation de l'art antérieur

Une démarche nécessaire dans la recherche d'un schéma de codage efficace est d'identifier les caractéristiques du signal et les sources des redondances que l'on peut y trouver. Cette analyse conduit à considérer les fréquences locales des motifs holographiques et par conséquent à privilégier les décompositions espace / fréquence, pour lesquelles les fonctions de décomposition utilisées auront la meilleure localisation espace / fréquence possible.

Il est connu du document de Shortt, A. N, intitulé « Compression of digital holograms of 3d objects using wavelets", publié en 2006 dans la revue Optics Express, page 2625, d'utiliser une base d'ondelettes de Gabor pour décomposer une image holographique à des fins de compression. Les ondelettes de Gabor constituent une des méthodes les plus efficaces pour extraire les informations pertinentes d'un signal holographique.

Il est connu du document de Viswanathan, K, intitulé "wavelet compression of digital holograms: toward a view-dependent framework" une comparaison de fresnelets avec les ondelettes Gabor en vue de leur mise en oeuvre dans le contexte d'une compression d'hologrammes digitaux en fonction de leur visualisation.

## 3. Inconvénients de l'art antérieur

Cependant, quelle que soit l'efficacité du schéma d'ondelettes choisi, la taille des données ne permet pas d'atteindre des taux de compression satisfaisant dans une perspective de transmission et d'affichage en temps réel sur les réseaux existants.

## 4. Exposé de l'invention

Ces objectifs, ainsi que d'autres qui apparaîtront par la suite, sont atteints à l'aide d'un procédé de traitement d'une séquence d'images holographiques, en vue de sa restitution par un dispositif d'affichage holographique à au moins un observateur,.

Selon l'invention, un tel procédé est particulier en ce que, pour une image holographique, décomposée sur une base d'ondelettes de Gabor en un ensemble de coefficients d'ondelettes, il comprend les étapes suivantes :

- Obtention d'informations représentatives de la décomposition sur la base d'ondelettes de Gabor ;
- Obtention d'informations représentatives d'une localisation dudit au moins un observateur dans un référentiel du dispositif d'affichage, les informations représentatives d'une localisation dudit au moins un observateur comprenant des paramètres caractéristiques d'un sous-ensemble connexe et convexe de positions de l'observateur, dit volume englobant;
- Sélection d'un sous-ensemble de coefficients d'ondelettes en fonction des informations d'ondelettes et des informations de localisation obtenues, ladite étape comprenant les sous-étapes suivantes :

  - - détermination d'une direction angulaire d'émission et d'une dispersion angulaire d'un cône de lumière produit par une ondelette de Gabor en un point de l'image holographique dans un référentiel du dispositif d'affichage ;

- - identification des cônes ayant une intersection non nulle avec au moins le volume englobant dudit au moins un observateur;

- - sélection des ondelettes correspondant aux cônes identifiés.

L'invention consiste à exploiter le caractère directionnel du spectre associé à une ondelette de Gabor et la relation entre la localisation fréquentielle d'une ondelette de Gabor et la direction de la lumière après diffraction à travers cette ondelette en un point de l'image holographique.

Connaissant la ou les zones de localisation d'un ou plusieurs observateurs du dispositif d'affichage, l'invention établit quelles ondelettes provoquent l'émission de lumière diffractée dans la direction des observateurs et, de cette manière, contribuent à reconstruire le sous-hologramme vu par le ou les observateurs depuis leurs points d'observation. De cette manière, elle sélectionne un sous-ensemble de coefficients d'ondelettes pertinents pour la reconstruction du sous-hologramme visible pour ce ou ces observateurs sur le dispositif d'affichage. Les autres coefficients ne sont pas pris en compte, ce qui conduit à l'élimination d'une quantité non négligeable de données, cette quantité étant d'autant plus importante que le nombre d'observateurs est plus réduit.

Une telle sélection nécessite donc d'obtenir au préalable des informations représentatives de la base d'ondelettes utilisée pour la décomposition de l'image holographique et d'une localisation du ou des observateurs par rapport au dispositif d'affichage holographique.

L'invention s'appuie donc sur une approche tout-à-fait nouvelle et inventive du traitement d'une séquence d'images holographiques, qui exploite les propriétés caractéristiques des ondelettes de Gabor pour extraire d'une image holographique l'information pertinente à coder et à transmettre, en fonction de la localisation des observateurs du dispositif d'affichage holographique. L'invention permet ainsi la génération d'un flux de données de taille réduite et plus adaptée à la bande passante des réseaux de communication actuels.

Selon l'invention, l'information représentative d'une localisation dudit au moins un observateur comprend des paramètres caractéristiques d'un sous-ensemble connexe et convexe de positions de l'observateur, dit volume englobant.

Un tel volume englobant est par exemple une boule centrée sur une position de l'observateur à un instant donné, dont le rayon est représentatif d'un déplacement de l'observateur pendant un intervalle de temps prédéterminé. Ce volume peut aussi être un pavé ou toute autre forme connexe et convexe dont les dimensions anticipent un déplacement de cet observateur entre deux mesures de localisation successives et lui garantissent un confort de visualisation de l'image holographique reconstruite.

Selon l'invention, l'étape de sélection d'un sous-ensemble de coefficients comprend les sous-étapes suivantes :

- détermination d'une direction angulaire d'émission et d'une dispersion angulaire d'un cône de lumière produit par une ondelette de Gabor en un point de l'image holographique dans un référentiel du dispositif d'affichage ;
- identification des cônes ayant une intersection non nulle avec au moins le volume englobant dudit au moins un observateur ;
- sélection des ondelettes correspondant aux cônes identifiés.

La lumière incidente, lorsqu'elle traverse une ondelette de Gabor en un point de l'image holographique, produit un cône de lumière dans une direction qui dépend de l'ondelette considéré et d'ouverture angulaire réduite, qui dépend de la largeur du spectre fréquentiel de l'ondelette. Il s'agit ici de déterminer pour chaque cône, s'il a une intersection non nulle avec le ou les volumes englobants des observateurs.

Selon un autre aspect de l'invention, les informations de localisation sont reçues dans un message de signalisation émis par un équipement agencé pour déterminer lesdites informations de localisation.

Dans ce mode de réalisation de l'invention, le procédé de traitement est mis en œuvre par un équipement distant, par exemple un équipement serveur. La sélection des coefficients d'ondelettes pertinents pour la reconstruction d'une image holographique est faite par ce serveur. En revanche, les informations de localisation du ou des observateurs par rapport au dispositif d'affichage sont déterminées localement, par un équipement agencé pour déterminer la position des observateurs à un instant courant. Il s'agit par exemple d'un équipement récepteur agencé pour recevoir des mesures de suivi de position d'un observateur d'un module de suivi de position (« headtracking », en anglais) placé sur la tête de cet observateur. L'équipement récepteur en question est agencé pour interpréter les mesures reçues, en déduire des informations de localisation exploitables et les transmettre via un réseau de communication dans un message de signalisation à un équipement émetteur ou serveur, agencé pour exploiter ces informations. Avantageusement, le message de signalisation est transmis dans un canal de retour, de type « back channel ».

Un avantage est que l'émetteur regroupe toute l'intelligence du traitement de la séquence d'images holographiques avant son éventuel codage, le récepteur restant de ce fait de conception simple et peu coûteuse.

Selon un autre aspect de l'invention, le procédé comprend une étape de codage des coefficients d'ondelettes à l'aide d'un arbre de type « zero-tree », selon laquelle un coefficient d'ondelettes est codé par un indice représentatif de l'ondelette dans la base d'ondelettes et une valeur du coefficient et une étape de génération d'un flux de données, comprenant pour un coefficient sélectionné, ledit indice et ladite valeur.

La technique de codage zéro tree est bien adaptée au codage d'un sous ensemble de coefficients ordonnés. Le flux de données obtenu par l'invention est de taille réduite et plus adaptée aux capacités des réseaux de communication actuels.

Selon un autre aspect de l'invention, pour une image suivante, la valeur codée d'un coefficient sélectionné comprend une variation par rapport à la valeur codée pour l'image précédente.

Un avantage du codage incrémental est qu'il réduit encore la taille des informations à transmettre.

Selon un autre aspect de l'invention, le procédé de traitement comprend une étape d'émission d'un message de signalisation comprenant les indices des coefficients d'ondelettes sélectionnés à destination d'un équipement serveur apte à générer un flux de données codant lesdits coefficients et une étape de réception d'un flux de données codant le sous-ensemble de coefficients d'ondelettes sélectionné en provenance dudit équipement serveur.

Ce procédé de traitement est mis en œuvre côté client ou récepteur, c'est-à-dire côté dispositif d'affichage holographique. La sélection des coefficients pertinents pour la reconstruction de la séquence d'images holographiques pour le ou les observateurs considérés est donc faite au plus près du dispositif d'affichage. Elle est ensuite transmise dans un message de signalisation par l'intermédiaire d'un canal de retour, par exemple de type « back channel » à l'équipement serveur agencé pour générer le flux de données codées à partir de la séquence d'images holographique.

Ce mode de réalisation est bien adapté aux équipements clients disposant de capacités de traitement importantes. Un avantage est qu'il soulage le serveur en reportant une partie de la charge de calcul sur les clients.

Selon un autre aspect de l'invention, suite à l'obtention de nouvelles informations de localisation, l'étape de sélection d'un sous-ensemble de coefficients est répétée et l'étape d'émission émet un nouveau message de signalisation comprenant les indices des coefficients ajoutés au sous-ensemble et les indices des coefficients supprimés du sous-ensemble.

Le sous-ensemble de coefficients utiles n'est pas complètement retransmis à chaque nouvelle acquisition d'informations de localisation, il est seulement mis à jour.

Le procédé de traitement d'une séquence d'images holographiques qui vient d'être présenté dans ses différents modes de réalisation peut être mis en œuvre par un dispositif de traitement d'une séquence d'images holographiques en vue de sa restitution sur un dispositif d'affichage holographique à au moins un observateur.

Selon l'invention, un tel dispositif comprend les unités suivantes :

- Obtention d'informations représentatives de la décomposition sur la base d'ondelettes de Gabor ;

- Obtention d'informations représentatives d'une localisation dudit au moins un observateur dans un référentiel du dispositif d'affichage ;

- Sélection d'un sous-ensemble de coefficients d'ondelettes en fonction des informations d'ondelettes et des informations de localisation obtenues.

L'invention concerne aussi un dispositif de codage d'un flux de données représentatif d'une séquence d'images holographiques. Selon l'invention, un tel dispositif de codage comprend un dispositif de traitement selon l'invention et comprend en outre les unités suivantes :

- codage des coefficients d'ondelettes à l'aide d'un arbre de type « zero-tree », un coefficient d'ondelettes étant codé par un indice représentatif de l'ondelette dans la base d'ondelettes et une valeur du coefficient ;

- génération d'un flux de données comprenant, pour un coefficient sélectionné, ledit indice et ladite valeur.

L'invention concerne également un équipement d'émission d'un flux de données représentatif d'une séquence d'images holographiques comprenant un dispositif de codage selon l'invention, un module d'émission adapté à transmettre le flux de données dans un réseau de communication et un module de réception apte à recevoir un signal porteur d'un message de signalisation comprenant les informations de localisation dudit au moins un observateur.

L'invention concerne en outre un dispositif de décodage d'un flux de données représentatif d'une séquence d'images holographiques comprenant un dispositif de traitement selon l'invention et comprenant en outre les unités suivantes :

- décodage des coefficients d'ondelettes à l'aide d'un arbre de type « zero-tree », un coefficient d'ondelettes étant codé par un indice représentatif de l'ondelette dans la base d'ondelettes et une valeur du coefficient ;

- reconstruction d'une image de la séquence, à partir des coefficients décodés comprenant, pour un coefficient sélectionné, ledit indice et ladite valeur.

L'invention concerne également un équipement de réception d'un flux de données représentatif d'une séquence d'images holographiques comprenant un module de réception d'informations de localisation dudit au moins un observateur dans un référentiel du dispositif d'affichage holographique, un dispositif de décodage du flux de données selon l'invention et un module de transmission de l'image reconstruite audit dispositif d'affichage.

L'invention concerne aussi un signal porteur d'un flux de données comprenant un premier message de signalisation émis par un équipement de réception d'un flux de données codant une séquence d'images holographiques à destination d'un équipement émetteur dudit flux.

Selon l'invention, ledit message comprend des informations représentatives d'une localisation d'au moins un observateur dans un référentiel d'un dispositif d'affichage holographique connecté audit équipement de réception.

L'invention concerne aussi un signal porteur d'un flux de données comprenant un deuxième message de signalisation émis par un équipement de réception d'un flux de données codant une séquence d'images holographiques à destination d'un équipement émetteur dudit flux. Selon l'invention, ledit message comprend les indices des coefficients d'ondelettes de Gabor sélectionnés pour le codage d'au moins une image de ladite séquence holographique.

L'invention concerne encore un programme d'ordinateur comportant des instructions pour la mise en œuvre des étapes d'un procédé de traitement d'une séquence d'images holographiques tel que décrit précédemment, lorsque ce programme est exécuté par un processeur. Un tel programme peut utiliser n'importe quel langage de programmation. Il peut être téléchargé depuis un réseau de communication et/ou enregistré sur un support lisible par ordinateur.

L'invention se rapporte enfin à un support de stockage, lisible par un processeur, intégré ou non au dispositif de traitement d'une requête de livraison selon l'invention, éventuellement amovible, mémorisant un programme d'ordinateur mettant en œuvre un procédé de génération d'un flux de données tel que décrit précédemment.

Les supports d'enregistrement mentionnés ci-avant peuvent être n'importe quelle entité ou dispositif capable de stocker le programme et lisible par un équipement terminal. Par exemple, les supports peuvent comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

## 5. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :

- la figure **1** présente un exemple de collection d'ondelettes de Gabor;
- les figures **2a** et **2b** présentent de façon schématique la relation entre localisation fréquentielle d'une ondelette et direction angulaire de la lumière diffractée par cette ondelette ;
- les figures **3a** et **3b** présentent de façon schématique la projection de lumière diffractée depuis un point du dispositif d'affichage dans un plan perpendiculaire à ce dispositif dans la direction d'un observateur ;
- la figure **4** présente de façon schématique les étapes d'un procédé de traitement d'au moins une image holographique selon l'invention ;
- la figure **5** présente de façon schématique une intersection entre un cône de lumière diffractée par une ondelette depuis un point du dispositif d'affichage et la position d'un observateur dans un référentiel de ce dispositif ;
- la figure **6** présente de façon schématique les étapes d'un procédé de traitement d'au moins une image holographique mis en œuvre par un équipement serveur selon un premier mode de réalisation de l'invention ;
- la figure **7** présente de façon schématique les étapes d'un procédé de traitement d'au moins une image holographique mis en œuvre par un équipement client selon un deuxième mode de réalisation de l'invention ;
- la figure **8** présente de façon schématique un exemple de structure matérielle d'un dispositif de traitement d'au moins une image holographique selon l'invention ;
- la figure **9** présente de façon schématique un exemple de structure matérielle d'un dispositif de traitement d'au moins une image holographique lorsqu'il est intégré à un équipement serveur; et
- la figure **10** présente de façon schématique un exemple de structure matérielle d'un dispositif de traitement d'au moins une image holographique selon l'invention, quand il est intégré à un équipement client.

**6. Description d'un mode de réalisation particulier de l'invention**

Le principe général de l'invention repose sur la décomposition d'une image holographique à partir d'une base d'ondelettes de Gabor et sur la sélection des ondelettes de cette base qui contribuent à la reconstruction du sous-hologramme visible depuis la ou les régions de localisation des observateurs d'un dispositif d'affichage de l'image holographique.

Dans la description qui va suivre, on considère un dispositif d'affichage comprenant un modulateur spatial de lumière SLM (pour « Spatial Light Modulator », en anglais), par exemple un écran LCD (Liquid Crystal Display). Le SLM est composé de pixels. L'ensemble des pixels du SLM nécessaires à l'affichage d'une ondelette constitue un pixel de l'hologramme, qui sera considéré ponctuel et sera dénommé « point » par la suite.

On considère une base de N ondelettes de Gabor, avec N entier. Les propriétés des ondelettes de Gabor sont connues et par exemple décrites dans l'ouvrage de D. Gabor, intitulé « Theory of Communication, publié en 1944.

On considère aussi une image holographique I. La décomposition en coefficients d'ondelettes de Gabor correspond à un ensemble de produits scalaires d'une fonction représentant l'image I par des fonctions de base ou ondelettes $\psi i(x,y,\sigma,\theta)$, que l'on peut exprimer de la façon suivante :

$$\psi_i(x,y,\sigma,\theta\ ) = K.\exp\left(-\pi\sigma^2(x^2+y^2)\right).\exp\left(\sqrt{2}\pi\sigma.I(x.Cos\theta\ +\ y.Sin\theta\ )\right)(1)$$

Dans l'équation (1), *x et y* désignent la position d'un point sur l'image I, i désigne l'indice de l'ondelette $\psi_j$ dans la base, associée à ce point, $\theta_i$ un angle indiquant une direction privilégiée de décomposition, $\sigma$ un niveau de décomposition et *K* une constante qui dépend d'une fréquence spatiale $f_i$ associée à l'ondelette $\psi_i$.

De façon réciproque, à chaque indice i d'une ondelette, on peut associer un point (x,y) de l'image I.

On notera que le niveau de décomposition $\sigma$ décide de la fréquence de l'ondelette $\psi_j$ qui correspond à la fréquence spatiale $f_i$.

Une image holographique I s'écrit donc après cette décomposition :

$$I(x,y) = \sum_{i,\sigma,\theta}\ c_{i,\sigma,\theta}\ .\psi_i(x,y,\sigma,\theta\ )\ (2)$$

avec

$$c_{i,\sigma,\theta} = \int_{-\infty}^{\infty} I(x,y).\psi_i(x,y,\sigma,\theta_i)dxdy\ \ (3)$$

$C_{i,\sigma,\theta}$ est le coefficient associé à l'ondelette $\psi_j$ obtenu pour l'image holographique I au point (x,y) de cette image.

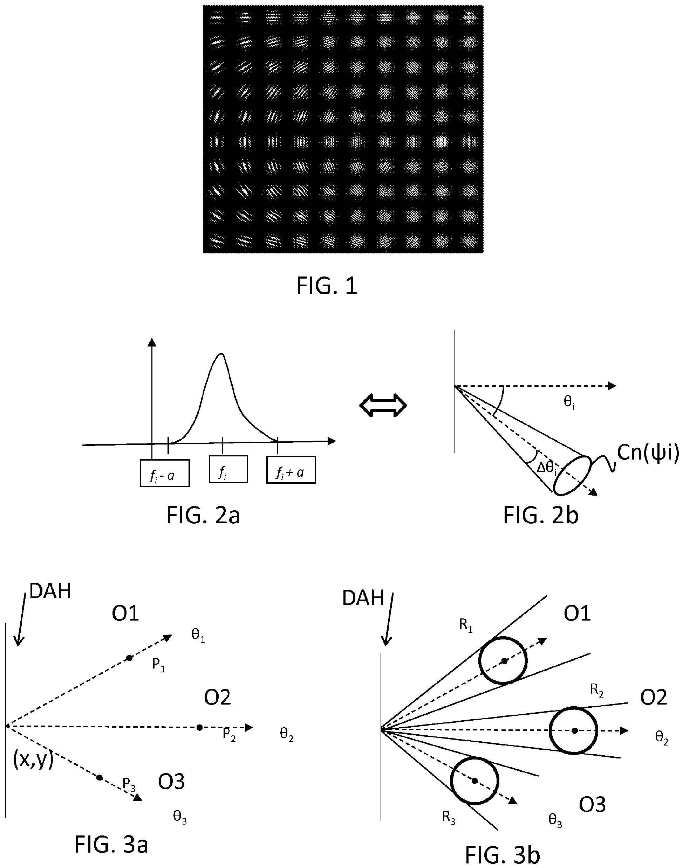

En relation avec la Fig. **1**, on présente à titre d'exemple une collection d'ondelettes de Gabor avec 10 valeurs de θ et 10 valeurs de σ.

Dans la suite, la base d'ondelettes mise en œuvre pour décomposer l'image I comprend un nombre N d'ondelettes plus élevé que la collection de la Fig. **1**, par exemple égal à 100.

En relation avec la Figure **2a**, on considère le spectre de fréquences d'une ondelette de Gabor $\psi_j$ autour de sa fréquence spatiale centrale $f_i$ et, en relation avec la Fig. **2b**, une direction d'émission des rayons lumineux après diffraction d'une onde lumineuse incidente à travers l'ondelette $\psi_j$.

On observe sur la Fig. **2b** que l'ondelette de Gabor $\psi_j$ engendre des rayons lumineux diffractés qui sont concentrés autour d'une direction d'émission principale $\theta_i$.

L'angle d'incidence $\theta_i$ du faisceau lumineux diffracté par l'ondelette $\psi_j$ est lié à la fréquence spatiale $f_i$ de cette ondelette, par l'équation suivante :

$$\sin\theta_i\ =\ \lambda.f_i, \hspace{6cm} (4)$$

où λ est la longueur d'onde de la lumière incidente utilisée, $\theta_i$ l'angle d'incidence du faisceau lumineux, et $f_i$ la fréquence spatiale du signal au point (x,y) correspondant à l'indice i.

La Fig. **2a** illustre en outre le fait que le spectre de l'ondelette $\psi_j$ est resserré autour de sa fréquence $f_i$.

En effet, si on considère un coefficient $c_i$ correspondant à la décomposition d'un motif holographique sur l'ondelette de Gabor $\psi_i$, sa transformée de Fourier possède la plus grande partie de son énergie dans la bande [$f_i$-a, $f_i$+a], avec a petit.

Partant de l'équation (4), on calcule la valeur du paramètre a, pour une fréquence $f_i$ donnée et une dispersion angulaire donnée, à partir de l'équation suivante :

$$a = \frac{\sin\left(\Delta\theta - \sin^{-1}(\lambda f)\right) - \lambda f}{\lambda} \quad (5)$$

avec $\lambda$ longueur d'onde dont la valeur est comprise entre 400nm et 780nm.

La Fig. **2b** illustre quant à elle le fait que le faisceau lumineux diffracté par l'ondelette de Gabor $\psi_i$ forme un cône $Cn(\psi_i)$ étroit, concentré autour de sa direction d'incidence $\theta_i$.

En utilisant l'équation (4) précédente, on peut déterminer, pour chaque ondelette $\psi_i$, l'ouverture ou dispersion angulaire $\Delta\theta_i$ de ce cône, en remplaçant la fréquence $f_i$ par la borne supérieure $f_i + a$ de la largeur du support du spectre de l'ondelette $\psi_i$ de la façon suivante :

$$\Delta\theta_i = \sin^{-1}\left(\lambda(\sigma + a)\right) - \sin^{-1}(\lambda\sigma)) \quad (6)$$

Selon l'invention, les ondelettes de la base sont choisies pour produire des cônes de lumière étroits, typiquement de dispersion angulaire $\Delta\theta_i$ égale à 1 degré ou 0,01745329 radians. Les ondelettes de Gabor ont des propriétés caractéristiques qui permettent de satisfaire cette contrainte.

L'équation (5) permet d'obtenir la valeur de a correspondante.

En relation avec les Figures **3a** et **3b**, on considère maintenant trois observateurs $O_1$, $O_2$, $O_3$ d'un dispositif d'affichage holographique DAH. Ce dispositif comprend un modulateur spatial de lumière SLM (pour « Spatial Light Modulator », en anglais), par exemple un écran LCD (Liquid Crystal Display).

Le SLM est composé de pixels ; l'ensemble des pixels du SLM nécessaires à l'affichage d'une ondelette constitue un pixel de l'hologramme, qui sera désormais considéré ponctuel et sera dénommé « point » par la suite.

Ces trois observateurs ont respectivement une position $P_1(x_1, y_1)$, $P_2(x_2, y_2)$, $P_3(x_3, y_3)$ dans un référentiel d'un plan du dispositif d'affichage DAH.

Sur la Figure **3a,** on considère un angle d'incidence $\theta_1$, $\theta_2$, $\theta_3$ que doit présenter respectivement un rayon lumineux diffracté par le dispositif holographique pour être reçu par un de ses observateurs $O_1$, $O_2$, $O_3$.

Sur la Figure **3b**, on considère maintenant une zone autour de chacun des observateurs $O_1$, $O_2$, $O_3$, appelé volume englobant, qui représente une région de localisation de ses observateurs pour une période temporelle prédéterminée. Il est défini comme un sous-ensemble connexe et convexe de positions possibles pour un observateur dans un référentiel du dispositif d'affichage pendant la période temporelle considérée. Par exemple, cette période temporelle démarre suite à l'acquisition de mesures de suivi de position des observateurs $P_1$, $P_2$, $P_3$.

Par exemple, le volume englobant de l'observateur $O_1$ est modélisée à partir des coordonnées de sa position $P_1$ et un rayon $R_1$. Ce rayon peut être considéré comme une distance moyenne parcourue par cet observateur pendant la période temporelle prédéterminée.

Dans le plan du dispositif d'affichage considéré, la région de localisation de l'observateur $O_1$ est donc représentée comme un disque. Dans un référentiel 3D, on considèrerait une boule de centre $P_1$ et de rayon $R_1$.

Un telle région de localisation considérée pour un observateur représente donc un ensemble de positions d'observations possibles pour cet observateur. Depuis cet ensemble de positions, l'observateur verra l'ensemble des rayons de lumière incidents susceptibles d'être reçus du dispositif d'affichage holographique en ces différents points.

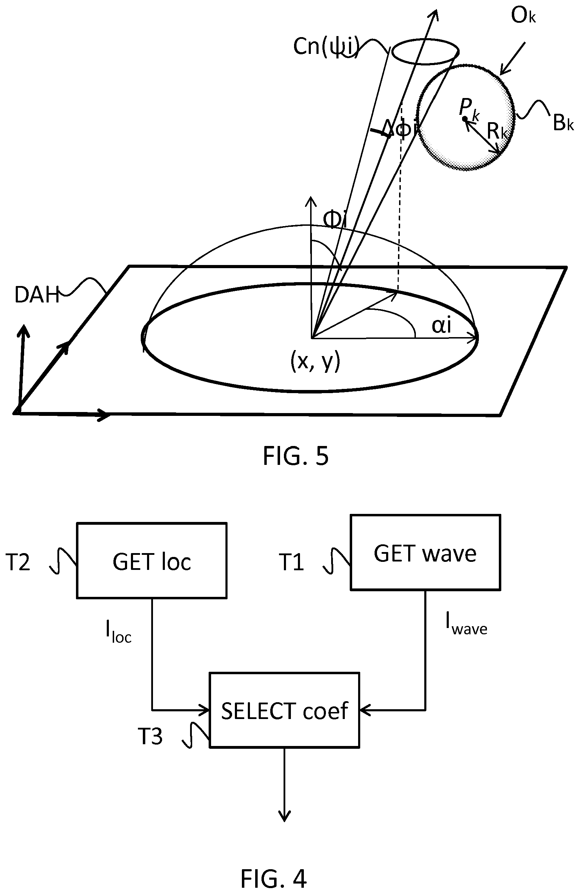

En relation avec la Figure **4**, on présente maintenant les étapes d'un procédé de traitement d'au moins une image holographique selon un mode de réalisation de l'invention.

On considère une séquence $SI_m$ d'images holographiques acquise par un module d'acquisition et représentative d'une scène 3D. Cette séquence est destinée à être restituée sur un dispositif d'affichage holographique à une pluralité d'observateurs.

Cette séquence d'images holographiques comprend M images ou trames $I_m$, avec M entier.

Chaque image $I_m$ de cette séquence a été préalablement décomposée sur une base de N ondelettes de Gabor, ce qui a conduit à l'obtention d'une représentation de chaque image sous la forme d'un ensemble de N coefficients d'ondelettes de Gabor, $\{C_{i,\sigma,\theta}\}_m$.

Le procédé de traitement d'une séquence d'images holographiques $SI_m$ selon l'invention comprend une étape T1 d'obtention d'informations relatives à la décomposition en ondelettes appliquée aux images Im de la séquence. De telles informations comprennent au moins, pour chaque ondelette de Gabor $\psi_i$ de la base utilisée pour la décomposition, un angle $\theta_i$ indiquant une direction privilégiée de décomposition et $\sigma_i$ un niveau de décomposition associé à cette ondelette. Comme indiqué précédemment, ce niveau de décomposition détermine la fréquence $f_i$ de l'ondelette $\psi_i$.

Le procédé comprend aussi une étape T2 d'obtentions d'informations relatives à la localisation des observateurs du dispositif d'affichage holographique sur lequel la séquence d'images holographique est destinée à être restituée.

Les spectateurs $O_k$, avec k entier compris entre 1 et K, sont localisés par exemple à l'aide d'un système de suivi de position de la tête ou du regard (« headtracking » ou « eyetracking », en anglais), qui détermine pour chacun d'eux une position $P_k$ dans un référentiel du dispositif d'affichage holographique.

Dans le cas où le volume englobant un observateur est modélisé par une boule $B_k$ de centre $P_k$ et de rayon $R_k$, les informations relatives à la localisation des observateurs comprennent donc au moins les coordonnées, par exemple cartésiennes ou sphériques de leur position $P_k$ dans ce référentiel et elles comprennent en outre un rayon moyen $R_k$, représentatif d'un déplacement moyen de l'observateur Ok pendant une période prédéterminée. La prise en compte de ce déplacement moyen permet de limiter le nombre de mises à jour des informations de localisation, en limitant le nombre de nouvelles acquisitions de mesure à une par période prédéterminée.

On comprend que de cette manière, l'étape T2 n'est pas nécessairement répétée avant le traitement de chaque nouvelle image Im, mais qu'elle est mise en œuvre avec une fréquence de répétition fonction de la période temporelle prédéterminée. Par exemple, elle pourrait être répétée toutes les secondes.

Selon un premier aspect de l'invention, ce rayon moyen a la même valeur pour tous les observateurs Ok, ce qui revient à modéliser les déplacements de tous les observateurs de la même façon par simplicité.

Selon un deuxième aspect de l'invention, ce rayon moyen a une valeur spécifique à chaque observateur et elle est choisie d'autant plus grande que l'observateur a une vitesse instantanée plus élevée.

Bien sûr, d'autres modélisations du volume englobant un observateur peuvent être envisagées, par exemple sous forme de cubes ou de pavés.

Le procédé de traitement comprend en outre une étape T3 de sélection d'un sous-ensemble de coefficients d'ondelettes en fonction des informations de localisation $I_{loc}$ et des informations de décomposition d'ondelettes $I_{wave}$ obtenues. Cette étape consiste à ne retenir pour une image holographique $I_m$ décomposée sous la forme d'un ensemble de coefficients d'ondelettes $\{C_{i,\,\sigma,\,\theta}\}_m$ que les indices des coefficients correspondant aux ondelettes $\psi_i$ qui génèrent, en chaque point (x, y) de l'image restituée sur le dispositif d'affichage, un cône de lumière ayant une intersection non nulle avec les régions de localisation des observateurs.

A titre d'exemple, on présente, en relation avec la Fig. **5**, un dispositif d'affichage DAH sur lequel on a représenté un point (x, y), au niveau duquel est diffracté le cône de lumière $Cn(\psi_i)$ correspondant à une ondelette $\psi_i$.

La sélection des coefficients pertinents pour un spectateur positionné en $P_k$ peut être faite de la façon suivante :

- Pour chaque ondelette $\psi_i$ associée à un point (x, y) du dispositif d'affichage, à un angle $\theta_i$ représentatif d'une direction privilégiée de décomposition et à un niveau de décomposition $\sigma_i$ :

  ◦ On considère le vecteur unitaire **u** dont les angles azimutal $\Phi_i$ et zénithal $\alpha_i$ en coordonnées sphériques sont respectivement $\Phi_i = \sin^{-1}(\lambda\sigma_i)$ et $\alpha_i = \theta_i$.
  ◦ On considère la dispersion angulaire $\Delta\phi$ dépendant de la largeur du spectre de l'ondelette $\psi_i$, calculée dans une passe préalable.
  ◦ Le coefficient $c_i$ associé à l'ondelette $\psi_i$ est retenu si et seulement si le cône d'ouverture $\Delta\phi$ présente une intersection non nulle avec la boule $B_k$ de centre $P_k$ et de rayon $R_k$. Cette intersection peut être déterminée de façon approchée par le critère suivant : le coefficient c est retenu si et seulement si $(P_k - (x,y))\,\Lambda u < R_k$ où $\Lambda$ désigne le produit vectoriel.

Bien sûr, si plusieurs observateurs $O_k$ sont présents, on considère l'union $U(B_k)$ des boules $B_k$ associés à ces observateurs et on sélectionne le coefficient ci dès lors qu'il présente une intersection non nulle avec au moins une des boules $B_k$ de l'union U.

Selon une variante applicative, les boules centrées en $P_k$ peuvent être remplacées par des cubes ou des pavés. Dans ce cas, l'intersection a lieu si et seulement si un des sommets du cube ou du pavé est dans l'intérieur du cône.

Dans une autre variante applicative, les coefficients sont sélectionnés à partir d'un ensemble de points $X_1, \ldots X_{Lk}$, avec $L_k$ entier non nul, dans la boule de centre $P_k$ et de rayon $R_k$ de la façon suivante :

- Pour chaque point $X_i$ :

  ◦ Calculer les coordonnées polaires $\propto_{x_l}$ et $\beta_{x_l}$ de $X_l$
  ◦ Sélectionner le coefficient Ci dont l'ondelette $\psi_i$ est associée aux paramètres $\theta_i$ et $\sigma_i$ qui minimisent le terme

$$\sqrt{(\cos^{-1}(\lambda\sigma_i) - \alpha_{x_l})^2 + (\theta_i - \beta_{x_l})^2}$$

On comprend que le fait de choisir un ensemble de points $X_1, \ldots X_{Lk}$ a pour but de limiter le nombre de calculs à effectuer pour sélectionner les indices des ondelettes qui contribuent à des cônes de lumière visibles dans le volume englobant l'observateur, dans cet exemple la boule $B_k$. Néanmoins, il est nécessaire de choisir un nombre suffisant de points $X_1, ...X_{Lk}$ dans la boule $B_k$ pour garantir que cet ensemble de points soit représentatif des différents points de vue d'un observateur à l'intérieur de cette boule.

A l'issue du procédé de traitement selon l'invention qui vient d'être présenté, on obtient donc, pour une image $I_m$ de la séquence holographique considérée, un sous-ensemble des coefficients d'ondelettes de Gabor, comprenant les coefficients qui sont pertinents pour la reconstruction du sous hologramme de l'image holographique Im visible par le ou les observateurs du dispositif d'affichage.

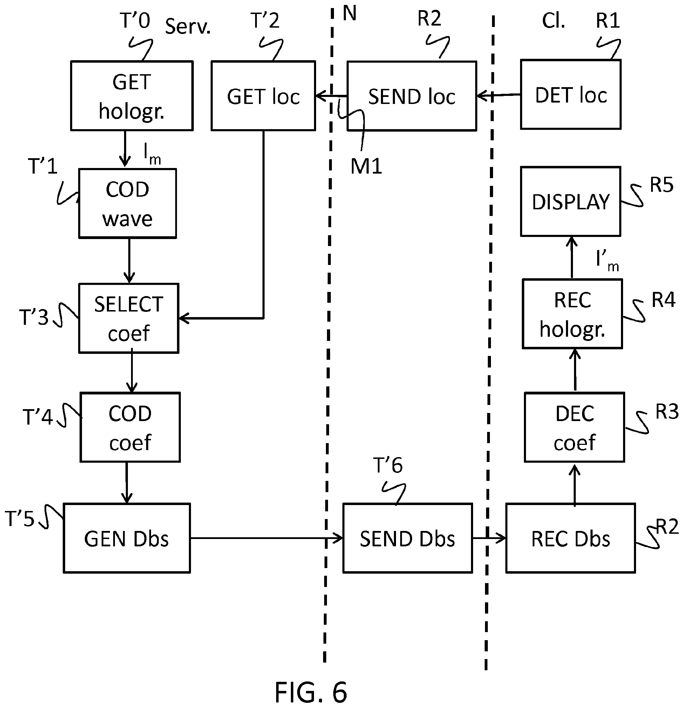

En relation avec la Figure **6**, on présente maintenant un exemple de mise en œuvre du procédé de traitement selon un premier mode de réalisation de l'invention. Dans cet exemple, on considère un équipement serveur Serv ou émetteur connecté à un réseau de communication N. Un tel équipement est agencé pour générer un flux de données codées à partir d'une séquence d'images holographiques et pour le transmettre par l'intermédiaire du réseau de communication N à un équipement client ou récepteur CI.

L'équipement serveur Serv met en œuvre le procédé de traitement d'une séquence d'images holographiques selon l'invention. En particulier, les étapes suivantes sont mises en œuvre :

Au cours d'une étape T'0, une séquence d'images holographiques $SI_m$ est obtenue. Elle a été acquise par un module d'acquisition qui peut être intégré ou on à l'équipement Serv.

Au cours d'une étape T'1, la séquence holographique $SI_m$ est représentée sous la forme d'une décomposition selon une base de N ondelettes de Gabor. Un ensemble de N coefficients d'ondelettes est obtenue pour chaque point (x,y) d'une image holographique Im de la séquence $SI_m$.

Les informations représentatives des ondelettes de Gabor mises en œuvre dans cette décomposition sont donc obtenues au cours de cette étape. Il s'agit par exemple des paramètres $\theta_i$ ,$\sigma_i$ distinctifs d'une ondelette $\psi_i$.

Au cours d'une étape T'2, des informations de localisation du ou des observateurs du dispositif d'affichage sont obtenues. Dans cet exemple, on suppose que le dispositif d'affichage est distant. Les informations de localisation du ou des observateurs sont donc reçues par l'intermédiaire du réseau de communication N en provenance de l'équipement client CI connecté au dispositif d'affichage. Au cours d'une étape T'3, un sous-ensemble de Nm coefficients est sélectionné dans l'ensemble de N coefficients, avec Nm entier inférieur à N, en fonction des informations d'ondelettes et de localisation obtenues. Cette sélection est faite image $I_m$ par image $I_m$.

Au cours d'une étape T'4 les coefficients sélectionnés pour une image $I_m$ sont encodés. De façon avantageuse, pour un coefficient ci sélectionné, deux informations sont encodées : l' index i représentatif de l'ondelette $\psi_i$ auquel se rapporte le coefficient et sa valeur.

L'encodage de ces deux types d'information est par exemple mise en œuvre à l'aide d'une méthode de zerotree, décrite en détails dans le document intitulé « A new, fast and efficient image codec based on set partitioning in hierarchical trees », par Said Amir and Pearlman William, publié dans la revue IEEE Transactions on Circuit and Systems for Video Technology, vol. 6(3), pages 243-250, en juin 1996.

Au cours d'une étape T'5, un flux de données Dbs (data bitstream, en anglais) est généré à partir des données codées. Il est transmis dans le réseau de communication N au cours d'une étape T'6.

On notera que l'étape d'encodage proprement dite pourrait aussi être mise en œuvre préalablement à l'étape de sélection. Dans ce cas, l'étape de génération d'un flux de données serait adaptée pour aller piocher ceux qui on été sélectionnés parmi les coefficients préalablement codés.

On considère maintenant le procédé de reconstruction d'une séquence d'images holographique exécuté par l'équipement client CI à réception du flux de données Dbs.

Au cours d'une étape préalable R1, l'équipement client CI a déterminé la ou les localisations des observateurs du dispositif d'affichage auquel il est connecté. Par exemple il a obtenu des mesures acquises par des dispositifs de suivi de position placés sur les observateurs, les a interprétées puis a constitué les informations de localisation Iloc à partir de ces mesures. Au cours d'une étape R2, il transmet les informations de localisation $I_{loc}$, dans un message de signalisation, par exemple dédié à la remontée d'informations relatives au codage par l'équipement client ou décodeur à l'équipement serveur ou codeur. Le message de signalisation utilisé par l'équipement client peut être par exemple un message de signalisation transmis dans un canal de retour de type « back channel » tel que décrit dans la norme MPEG-4 ISO/IEC 14496 spécifiée par le groupe de normalisation ISO/IEC/JTC1/SC29/WG11.

Au cours d'une étape R2, le flux de données Dbs est reçu. Les données codées sont extraites puis décodées au cours d'une étape R3 destinée à fournir les indices et valeurs des coefficients décodés pour une image holographique Im courante. Au cours d'une étape R4, un sous-hologramme $I'_m$ est reconstruit à partir des coefficients décodés. On parle ici de sous-hologramme $I'_m$, car seuls les coefficients sélectionnés ont été transmis. Le sous-hologramme I'm est envoyé à l'affichage en R5.

Le mode de réalisation qui vient d'être présenté illustre un fonctionnement client-serveur en mode push. Le client pousse vers le serveur des informations de localisation des observateurs positionnés devant le dispositif d'affichage et le serveur répond en transmettant la sélection de coefficients codés pertinents pour la reconstruction d'un sous-hologramme visible par les observateurs, en fonction des informations de position reçues.

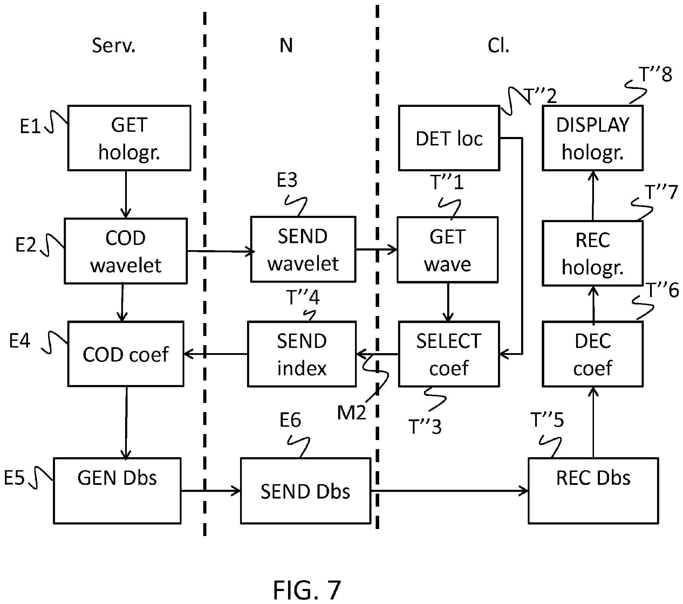

En relation avec la Figure **7**, on présente maintenant un exemple de mise en œuvre du procédé de traitement selon un deuxième mode de réalisation de l'invention. Dans cet exemple, il est exécuté par un équipement client CI' ou décodeur connecté à un réseau de communication N'. Un tel équipement est agencé pour recevoir un flux de données codées à partir d'une séquence d'images holographiques SIm par un équipement serveur Serv' ou encodeur et pour restituer une séquence d'images holographiques reconstruite sur un dispositif d'affichage holographique. Au cours d'une étape T''1, des informations relatives à la base d'ondelettes de Gabor utilisée pour représenter les images holographiques sont reçues de l'équipement serveur Serv'. On comprend que cette étape n'est pas nécessairement mise en œuvre préalablement à chaque nouvelle opération de sélection de coefficients d'ondelettes selon l'invention. En effet, si la base d'ondelettes utilisée est toujours la même, elle sera exécutée une fois pour toutes.

L'étape T''2 de détermination d'information de localisation des observateurs est similaire à l'étape R1 déjà décrite. Les informations de localisation Iloc sont obtenues à l'occasion de cette étape.

Au cours d'une étape T''3, un sous-ensemble de Nm coefficients d'ondelettes est sélectionné à partir des informations de localisation et d'ondelettes obtenues préalablement.

Au cours d'une étape T''4, les indices des coefficients sélectionnés sont transmis à l'équipement serveur Serv' dans un message de signalisation par l'intermédiaire du réseau de communication N'. Comme évoqué précédemment, un message de type back channel peut avantageusement être utilisé pour cette remontée d'informations au codeur.

Par ailleurs, les étapesT''5 à T''8 correspondent aux étapes R2 à R4 précédemment décrites en relation avec la Fig. **6**.

On considère maintenant le procédé de génération d'un flux de données Dbs à partir d'une séquence d'images holographique exécuté par l'équipement serveur Serv' CI à partir des indices des coefficients d'ondelettes sélectionnés par l'équipement client CI'.

Les étapes E1 d'obtention d'une séquence d'images holographiques et E2 de décomposition sur une base d'ondelettes de Gabor de cette séquence correspondent aux étapes T'0 et T'11 déjà décrites. Au cours d'une étape E3, des informations relatives à la base d'ondelette utilisée sont transmises à l'équipement client cl'. Comme précédemment évoqué pour l'étape T''1, cette étape peut être mise en œuvre une fois pour toutes et ne pas être répétée tant que la base d'ondelettes utilisée n'est pas modifiée.

Au cours d'une étape E4, les coefficients d'ondelettes sont codés. Cette étape correspond à l'étape T'4 précédemment décrite. Elle peut s'appliquer aussi bien à l'ensemble N de coefficients ou bien au sous-ensemble Nm de coefficients sélectionnés pour une image holographique Im courante. Dans le premier cas, elle est mise en œuvre préalablement à la réception des indices de coefficients sélectionnés et c'est l'étape E5 de génération d'un flux de données qui pioche parmi les coefficients codés ceux qui correspondent aux indices reçus. Dans le second cas, elle est déclenchée à réception des indices et seuls les coefficients sélectionnés sont encodés.

Au cours d'une étape E6, le flux de données Dbs généré est transmis à l'équipement client CI' par l'intermédiaire du réseau de communication N.

Le mode de réalisation qui vient d'être présenté illustre un fonctionnement client-serveur en mode pull. Le serveur reçoit de son client les indices de coefficient dont ce dernier a besoin et constitue un flux de données en fonction des indices reçus.

On notera que l'invention peut être mise en œuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en œuvre la ou les fonctions décrites pour le module ou l'entité concerné(e).

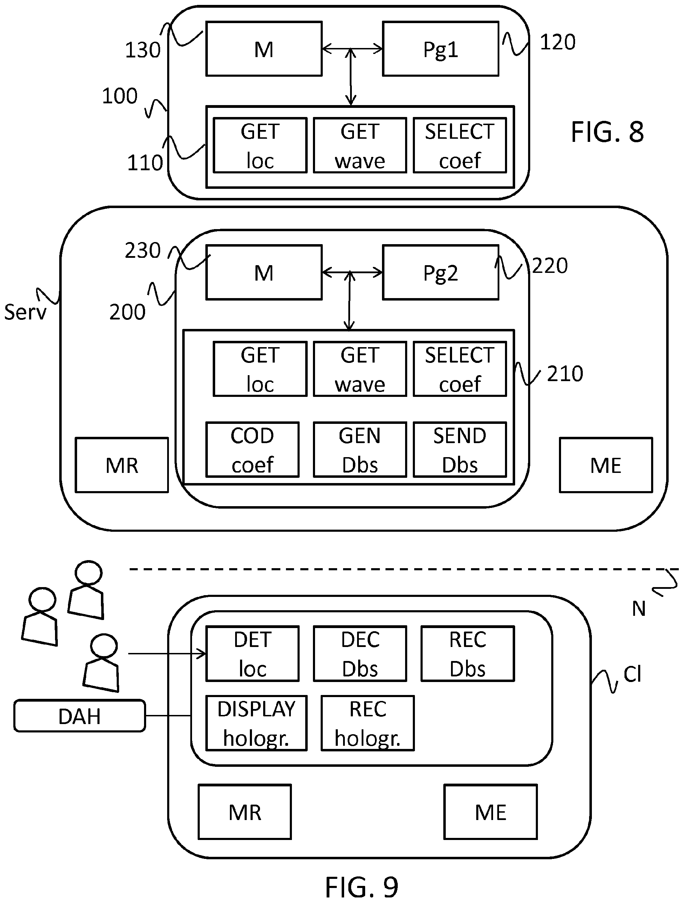

En relation avec la Figure **8**, on présente maintenant un exemple de structure simplifiée d'un dispositif de traitement DT 100 d'au moins une image holographique selon l'invention

Le dispositif de traitement 100 met en œuvre le procédé de traitement selon l'invention qui vient d'être décrit en relation avec la Fig. 4. Il peut aussi bien être intégré à un équipement serveur qu'à un équipement client.

Par exemple, le dispositif 100 comprend une unité de traitement 110, équipée d'un processeur P1, et pilotée par un programme d'ordinateur $Pg_1$ 120, stocké dans une mémoire 130 et mettant en œuvre le procédé de traitement selon l'invention.

A l'initialisation, les instructions de code du programme d'ordinateur $Pg_1$ 120 sont par exemple chargées dans une mémoire RAM avant d'être exécutées par le processeur de l'unité de traitement 110. Le processeur de l'unité de traitement 110 met en œuvre les étapes du procédé de traitement décrit précédemment, selon les instructions du programme d'ordinateur 120. Selon l'invention, le dispositif 100 comprend au moins une unité GET loc d'obtention d'information de localisation des observateurs d'un dispositif d'affichage holographique DAH, une unité GET wave d'obtention d'informations relatives à la base d'ondelettes de Gabor mise en œuvre pour décomposer la séquence d'images holographiques, une unité SELECT de sélection de coefficients d'ondelettes pertinents pour la reconstruction de la séquence en fonction des informations de localisation et d'ondelettes obtenues.

En relation avec la Fig. **9**, on présente maintenant un exemple de structure simplifiée d'un dispositif de traitement 200 d'au moins une image holographique selon le premier mode de réalisation de l'invention .

Le dispositif de traitement 200 met en œuvre le procédé de traitement selon l'invention qui vient d'être décrit en relation avec la Fig. 6. Il est intégré à un équipement serveur Serv.

Dans cet exemple de réalisation, le dispositif 200 comprend en outre une unité COD coef de codage des coefficients d'ondelettes, une unité GEN Dbs de génération d'un flux de données à partir des coefficients codés sélectionnés et une unité SEND Dbs de transmission du flux de données Dbs obtenu.

Ces unités sont pilotées par le processeur P2 de l'unité de traitement 210.

Le dispositif 200 de traitement est donc agencé pour coopérer avec l'équipement serveur Serv, en particulier avec un module MR de réception par l'intermédiaire duquel les informations de localisation sont reçues en provenance d'un équipement client CI connecté à un dispositif d'affichage DAH et un module ME d'émission par l'intermédiaire duquel le flux de données bts est transmis à l'équipement CI.

L'équipement client CI comprend un module DET loc de détermination des informations de localisation des observateurs du dispositif d'affichage DAH, un module ME d'émission apte à émettre les informations de localisation du ou des observateur, un module MR de réception du flux de données Dbs émis par l'équipement serveur Serv, un module DEC coef de décodage des coefficients du flux, un module REC de reconstruction de l'image holographique et un module DISPLAY de commande d'affichage de l'image holographique reconstruite au dispositif d'affichage holographique DAH auquel il est connecté par l'intermédiaire du module MT.

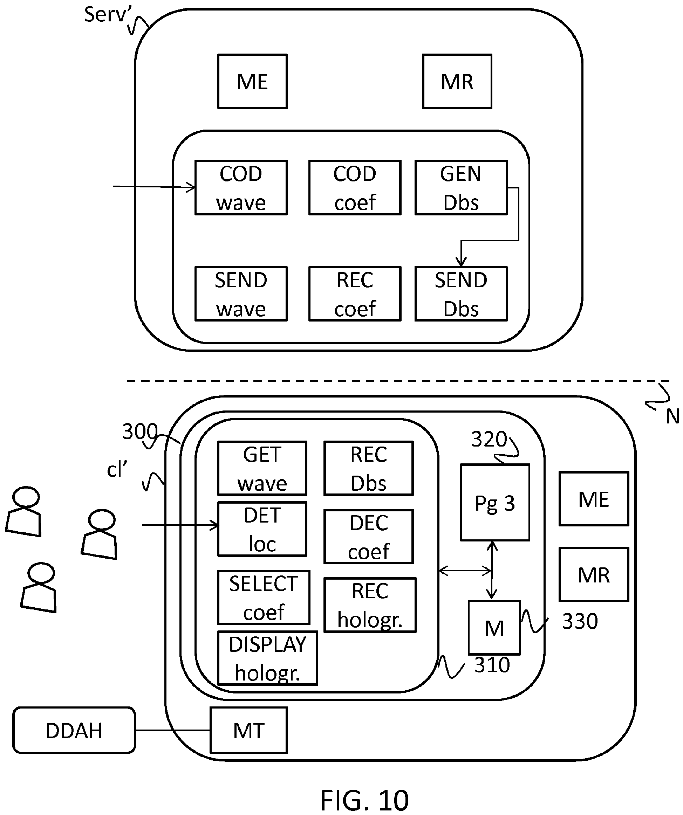

En relation avec la Figure **10**, on présente maintenant un exemple de structure simplifiée d'un dispositif de traitement 300 d'au moins une image holographique selon un deuxième mode de réalisation de l'invention. Ce dispositif met en œuvre le procédé de traitement qui vient d'être décrit en relation avec la Fig. **7**. Il est intégré à un équipement client CI'.

Par exemple, le dispositif 300 comprend une unité de traitement 310, équipée d'un processeur P3, et pilotée par un programme d'ordinateur $Pg_3$ 320, stocké dans une mémoire 130 et mettant en œuvre le procédé de traitement selon l'invention.

A l'initialisation, les instructions de code du programme d'ordinateur $Pg_3$ 320 sont par exemple chargées dans une mémoire RAM avant d'être exécutées par le processeur de l'unité de traitement 110. Le processeur de l'unité de traitement 310 met en œuvre les étapes du procédé de traitement décrit précédemment en relation avec la Fig. **7**, selon les instructions du programme d'ordinateur 120. Selon l'invention, le dispositif 300 comprend au moins les unités du dispositif 100 qui viennent d'être décrites.

De façon avantageuse, le dispositif 300 comprend en outre une unité REC de réception d'un flux de données Bts transmis par un équipement serveur Serv', une unité DEC de décodage des coefficients d'ondelettes reçues dans le flux Bts, une unité REC hologr de reconstruction d'un sous-hologramme à partir des coefficients décodés et une unité DISPLAY d'affichage du sous-hologramme reconstruit sur un dispositif d'affichage holographique DAH connecté à l'équipement client CI'.

Ces unités sont pilotées par le processeur P3 de l'unité de traitement 310.

Le dispositif 300 de traitement est donc agencé pour coopérer avec l'équipement client CI' et, en particulier les modules suivants de ce module :

- un module de connexion au réseau de communication N, par l'intermédiaire duquel il transmet les indices des coefficients sélectionnées et il reçoit le flux de données Bts

- un module de connexion au dispositif d'affichage DAH par l'intermédiaire duquel il commande l'affichage du sous-hologramme reconstruit.

L'équipement serveur Serv' comprend un module MR de réception apte à recevoir les indices des coefficients d'ondelettes sélectionnés par l'équipement client CI', un module COD coef de codage des coefficients sélectionnés, un module GEN Dbs de génération d'un flux de données Bds, un module ME d'émission du flux de données à destination de l'équipement client CI'.

## Revendications

**1.** Procédé de traitement d'une séquence d'images holographiques, en vue de sa restitution par un dispositif d'affichage holographique (DAH) à au moins un observateur ($O_1$, $O_2$, $O_3$, $O_k$), **caractérisé en ce que**, pour une image holographique décomposée sur une base d'ondelettes de Gabor en un ensemble de coefficients d'ondelettes, le procédé comprend les étapes suivantes :

- Obtention (T1) d'informations représentatives de la décomposition sur la base d'ondelettes de Gabor ;
- Obtention (T2) d'informations (Iloc) représentatives d'une localisation dudit au moins un observateur dans un référentiel du dispositif d'affichage ; les informations représentatives d'une localisation dudit au moins un observateur comprenant des paramètres caractéristiques d'un sous-ensemble connexe et convexe de positions de l'observateur, dit volume englobant ($B_k$) ;

- Sélection (T3) d'un sous-ensemble de coefficients d'ondelettes en fonction des informations d'ondelettes et des informations de localisation obtenues, ladite étape comprenant les sous-étapes suivantes :

- détermination d'une direction angulaire d'émission et d'une dispersion angulaire d'un cône de lumière produit par une ondelette de Gabor($\psi_i$) en un point de l'image holographique (x,y) dans un référentiel du dispositif d'affichage ;
- identification des cônes (Cn($\psi_i$)) ayant une intersection non nulle avec au moins le volume englobant ($B_k$) dudit au moins un observateur ($O_k$) ;
- sélection des ondelettes ($\psi_i$) correspondant aux cônes identifiés;

- encodage des coefficients sélectionnés.

2. Procédé de traitement d'une séquence d'images holographiques selon la revendication **1**, **caractérisé en ce que** les informations de localisation sont reçues dans un message de signalisation ($M_1$) émis par un équipement (CI) agencé pour déterminer lesdites informations de localisation.

3. Procédé de traitement d'une séquence d'images holographiques selon la revendication **2**, **caractérisé en ce qu'**il comprend une étape de codage (T'4) des coefficients d'ondelettes à l'aide d'un arbre de type « zero-tree », selon laquelle un coefficient d'ondelettes est codé par un indice représentatif de l'ondelette dans la base d'ondelettes et une valeur du coefficient et une étape (T'5) de génération d'un flux de données, comprenant pour un coefficient sélectionné, ledit indice et ladite valeur.

4. Procédé de traitement d'une séquence d'images holographiques selon la revendication **3**, **caractérisé en ce que**, pour une image suivante, la valeur codée d'un coefficient sélectionné comprend une variation par rapport à la valeur codée pour l'image précédente.

5. Procédé de traitement d'une séquence d'images holographiques selon la revendication **1**, **caractérisé en ce qu'**il comprend une étape d'émission (T"4) d'un message de signalisation (M2) comprenant les indices des coefficients d'ondelettes sélectionnés à destination d'un équipement serveur (Serv') apte à générer un flux de données (Bts) codant lesdits coefficients et une étape de réception (T"5) du flux de données codant le sous-ensemble de coefficients d'ondelettes sélectionné en provenance de l'équipement serveur (Serv).

6. Procédé de traitement d'une séquence d'images holographiques selon la revendication **5, caractérisé en ce que**, suite à l'obtention de nouvelles informations de localisation, l'étape de sélection (T"3) d'un sous-ensemble de coefficients est répétée et **en ce que** l'étape d'émission émet un nouveau message de signalisation (M2) comprenant les indices des coefficients ajoutés au sous-ensemble et les indices des coefficients supprimés du sous-ensemble.

7. Dispositif (100) de traitement d'une séquence d'images holographiques en vue de sa restitution sur un dispositif d'affichage holographique à au moins un observateur, **caractérisé en ce que** ledit dispositif comprend les unités suivantes :

- Obtention (GET wave) d'informations représentatives de la décomposition sur la base d'ondelettes de Gabor ;
- Obtention (GET loc) d'informations représentatives d'une localisation dudit au moins un observateur dans un référentiel du dispositif d'affichage, les informations représentatives d'une localisation dudit au moins un observateur comprenant des paramètres caractéristiques d'un sous-ensemble connexe et convexe de positions de l'observateur, dit volume englobant ($B_k$) ;
- Sélection (SEL coef) d'un sous-ensemble de coefficients d'ondelettes en fonction des informations d'ondelettes et des informations de localisation obtenues, ladite étape comprenant les sous-étapes suivantes :

- détermination d'une direction angulaire d'émission et d'une dispersion angulaire d'un cône de lumière produit par une ondelette de Gabor($\psi_i$) en un point de l'image holographique (x,y) dans un référentiel du dispositif d'affichage ;
- identification des cônes (Cn($\psi_i$)) ayant une intersection non nulle avec au moins le volume englobant ($B_k$) dudit au moins un observateur ($O_k$) ;
- sélection des ondelettes ($\psi_i$) correspondant aux cônes identifiés.

**8.** Dispositif (200) de codage d'une séquence d'images holographiques en vue de sa transmission et de sa restitution à au moins un observateur sur un dispositif d'affichage holographique, **caractérisé en ce qu'**il comprend un dispositif (100) de traitement selon la revendication **7** et **en ce qu'**il comprend en outre les unités suivantes :

- codage (COD wave) des coefficients d'ondelettes à l'aide d'un arbre de type « zero-tree », un coefficient d'ondelettes étant codé par un indice représentatif de l'ondelette dans la base d'ondelettes et une valeur du coefficient ;
- génération (GEN Bts) d'un flux de données comprenant, pour un coefficient sélectionné, ledit indice et ladite valeur.

**9.** Equipement émetteur (Serv) d'un flux de données codant une séquence d'images holographiques, **caractérisé en ce qu'**il comprend un dispositif (200) de codage selon la revendication **8**, un module d'émission (ME) adapté à transmettre le flux de données dans un réseau de communication et un module de réception (MR) apte à recevoir un signal porteur d'un message de signalisation ($M_1$) comprenant les informations de localisation (Iloc) dudit au moins un observateur ($O_1$, $O_2$, $O_3$).

**10.** Dispositif de décodage d'un flux de données holographique représentatif d'une séquence d'images holographique en vue de sa de sa restitution à au moins un observateur sur un dispositif d'affichage holographique, **caractérisé en ce qu'**il comprend un dispositif de traitement selon la revendication **7** et **en ce qu'**il comprend en outre les unités suivantes :

- décodage des coefficients d'ondelettes à l'aide d'un arbre de type « zero-tree », un coefficient d'ondelettes étant codé par un indice représentatif de l'ondelette dans la base d'ondelettes et une valeur du coefficient ;
- reconstruction d'une image de la séquence, à partir des coefficients décodés comprenant, pour un coefficient sélectionné, ledit indice et ladite valeur.

**11.** Equipement de réception (CI') d'un flux de données représentatif d'une séquence d'images holographiques en vue de sa restitution à au moins un observateur sur un dispositif d'affichage holographique, **caractérisé en ce qu'**il comprend un module de réception (MR') apte à recevoir des informations de localisation dudit au moins observateur dans un référentiel du dispositif d'affichage holographique, un dispositif de décodage (300) du flux de données selon la revendication **10**, et un module de transmission (MT) de l'image reconstruite audit dispositif d'affichage.

**12.** Signal portant un premier message de signalisation ($M_1$) émis par un équipement de réception (CI) d'un flux de données codant une séquence d'images holographiques à destination d'un équipement émetteur dudit flux, conforme à la revendication **9**, **caractérisé en ce qu'**il comprend des informations représentatives d'une localisation d'au moins un observateur dans un référentiel d'un dispositif d'affichage holographique connecté audit équipement de réception.

**13.** Signal portant un deuxième message (M2) de signalisation émis par un équipement de réception (CI') conforme à la revendication 11 d'un flux de données codant une séquence d'images holographiques à destination d'un équipement émetteur (Serv') dudit flux, **caractérisé en ce qu'**il comprend les indices des coefficients d'ondelettes de Gabor sélectionnés pour le codage d'au moins une image de ladite séquence.

**14.** Programme d'ordinateur comprenant des instructions pour la mise en œuvre du procédé de traitement d'une séquence d'images holographiques selon l'une des revendications **1** à **6**.

**Patentansprüche**

**1.** Verfahren zum Verarbeiten einer Folge von holografischen Bildern im Hinblick auf ihre Wiedergabe durch eine holografische Anzeigevorrichtung (DAH) an mindestens einen Beobachter ($O_1$, $O_2$, $O_3$, $O_k$), **dadurch gekennzeichnet, dass** für ein holografisches Bild, das auf einer Basis von Gabor-Wavelets in eine Menge von Wavelet-Koeffizienten zerlegt ist, das Verfahren die folgenden Schritte aufweist:

- Erhalten (T1) von repräsentativen Informationen für die Zerlegung auf der Basis von Gabor-Wavelets;
- Erhalten (T2) von repräsentativen Informationen (Iloc) für eine Lokalisierung des mindestens einen Beobachters in einem Bezugssystem der Anzeigevorrichtung; wobei die repräsentativen Informationen für eine Lokalisierung des mindestens einen Beobachters charakteristische Parameter einer verbundenen und konvexen Untermenge der Positionen des Beobachters aufweisen, das so genannte umschließende Volumen ($B_K$) ;
- Auswählen (T3) einer Untermenge von Wavelet-Koeffizienten in Abhängigkeit von den Wavelet-Informationen und den erhaltenen Lokalisierungsinformationen, wobei der Schritt die folgenden Unterschritte aufweist:

- Bestimmen einer Abstrahlwinkelrichtung und einer Winkelstreuung eines Lichtkegels, der von einem Gabor-Wavelet ($\psi_i$) an einem Punkt des holografischen Bildes (x, y) in einem Bezugssystem der Anzeigevorrichtung erzeugt wird;
- Identifizieren von Kegeln (Cn($\psi_i$)), die einen Schnittpunkt ungleich Null mit mindestens dem umschließenden Volumen ($B_K$) des mindestens einen Beobachters ($O_K$) haben;
- Auswählen von Wavelets ($\psi_i$), die den identifizierten Kegeln entsprechen;

- Codieren der ausgewählten Koeffizienten.

2. Verfahren zum Verarbeiten einer Folge von holografischen Bildern nach Anspruch 1, **dadurch gekennzeichnet, dass** die Lokalisierungsinformationen in einer Signalisierungsnachricht ($M_1$) empfangen werden, die von einer Einrichtung (CI) gesendet wird, die zum Bestimmen der Lokalisierungsinformationen ausgebildet ist.

3. Verfahren zum Verarbeiten einer Folge von holografischen Bildern nach Anspruch 2, **dadurch gekennzeichnet, dass** es einen Schritt zum Codieren (T'4) der Wavelet-Koeffizienten mithilfe eines Baums des Typs "zero-tree" aufweist, gemäß dem ein Wavelet-Koeffizient durch einen repräsentativen Index für das Wavelet in der Wavelet-Basis codiert wird, und einen Wert des Koeffizienten und einen Schritt (T'5) zum Erzeugen eines Datenstroms, der für einen ausgewählten Koeffizienten den Index und den Wert aufweist.

4. Verfahren zum Verarbeiten einer Folge von holografischen Bildern nach Anspruch 3, **dadurch gekennzeichnet, dass** für ein nachfolgendes Bild der codierte Wert eines ausgewählten Koeffizienten eine Variation in Bezug auf den codierten Wert für das vorausgehende Bild aufweist.

5. Verfahren zum Verarbeiten einer Folge von holografischen Bildern nach Anspruch 1, **dadurch gekennzeichnet, dass** es einen Schritt zum Senden (T"4) einer Signalisierungsnachricht (M2) aufweist, die die Indizes der Wavelet-Koeffizienten aufweist, die für eine Servereinrichtung (Serv') ausgewählt werden, die ausgebildet ist zum Erzeugen eines Datenstroms (Bts), der die Koeffizienten codiert, und einen Schritt zum Empfangen (T"5) des Datenstroms, der die Untermenge von ausgewählten Wavelet-Koeffizienten codiert, die von der Servereinrichtung (Serv) stammen.

6. Verfahren zum Verarbeiten einer Folge von holografischen Bildern nach Anspruch 5, **dadurch gekennzeichnet, dass** nach dem Erhalt neuer Lokalisierungsinformationen, der Schritt zum Auswählen (T"3) einer Untermenge von Koeffizienten wiederholt wird, und dadurch, dass der Schritt zum Senden eine neue Signalisierungsnachricht (M2) sendet, die die Indizes der zu der Untermenge hinzugefügten Koeffizienten und die Indizes der aus der Untermenge entfernten Koeffizienten aufweist.

7. Vorrichtung (100) zum Verarbeiten einer Folge von holografischen Bildern im Hinblick auf ihre Wiedergabe auf einer holografischen Anzeigevorrichtung an mindestens einen Beobachter, **dadurch gekennzeichnet, dass** die Vorrichtung die folgenden Einheiten aufweist:

- Erhalten (GET wave) von repräsentativen Informationen für die Zerlegung auf der Basis von Gabor-Wavelets;
- Erhalten (GET loc) von repräsentativen Informationen für eine Lokalisierung des mindestens einen Beobachters in einem Bezugssystem der Anzeigevorrichtung, wobei die repräsentativen Informationen für eine Lokalisierung des mindestens einen Beobachters charakteristische Parameter einer verbundenen und konvexen Untermenge der Positionen des Beobachters aufweisen, das so genannte umschließende Volumen ($B_K$);
- Auswählen (SEL coef) einer Untermenge von Wavelet-Koeffizienten in Abhängigkeit von den Wavelet-Informationen und den erhaltenen Lokalisierungsinformationen, wobei der Schritt die folgenden Unterschritte aufweist:

- Bestimmen einer Abstrahlwinkelrichtung und einer Winkelstreuung eines Lichtkegels, der von einem Gabor-Wavelet ($\psi_i$) an einem Punkt des holografischen Bildes (x, y) in einem Bezugssystem der Anzeigevorrichtung erzeugt wird;
- Identifizieren von Kegeln (Cn($\psi_i$)), die einen Schnittpunkt ungleich Null mit mindestens dem umschließenden Volumen ($B_K$) des mindestens einen Beobachters ($O_K$) haben;
- Auswählen von Wavelets ($\psi_i$), die den identifizierten Kegeln entsprechen.

8. Vorrichtung (200) zum Codieren einer Folge von holografischen Bildern im Hinblick auf ihre Übertragung und ihre Wiedergabe an mindestens einen Beobachter auf einer holografischen Anzeigevorrichtung, **dadurch gekennzeichnet, dass** sie eine Vorrichtung (100) zum Verarbeiten nach Anspruch 7 aufweist und dass sie darüber hinaus die folgenden Einheiten aufweist:

   - Codieren (COD wave) der Wavelet-Koeffizienten mithilfe eines Baums des Typs "zero-tree", wobei ein Wavelet-Koeffizient durch einen repräsentativen Index für das Wavelet in der Wavelet-Basis und einen Wert des Koeffizienten codiert wird;
   - Erzeugen (GEN Bts) eines Datenstroms, der für einen ausgewählten Koeffizienten den Index und den Wert aufweist.

9. Einrichtung zum Senden (Serv) eines Datenstroms, der eine Folge von holografischen Bildern codiert, **dadurch gekennzeichnet, dass** sie eine Vorrichtung (200) zum Codieren nach Anspruch 8 aufweist, ein Sendemodul (ME), ausgebildet zum Übertragen des Datenstroms in ein Kommunikationsnetz und ein Empfangsmodul (MR), ausgebildet zum Empfangen eines Trägersignals einer Signalisierungsnachricht ($M_1$), die die Lokalisierungsinformationen (Iloc) des mindestens einen Beobachters ($O_1$, $O_2$, $O_3$) aufweist.

10. Vorrichtung zum Decodieren eines repräsentativen holografischen Datenstroms für eine Folge von holografischen Bildern im Hinblick auf ihre Wiedergabe an mindestens einen Beobachter auf einer holografischen Anzeigevorrichtung, **dadurch gekennzeichnet, dass** sie eine Vorrichtung zum Verarbeiten nach Anspruch 7 aufweist und dass sie darüber hinaus die folgenden Einheiten aufweist:

   - Decodieren der Wavelet-Koeffizienten mithilfe eines Baums des Typs "zero-tree", wobei ein Wavelet-Koeffizient durch einen repräsentativen Index für das Wavelet in der Wavelet-Basis und einen Wert des Koeffizienten codiert ist;
   - Wiederherstellen eines Bildes der Folge ausgehend von den decodierten Koeffizienten, die für einen ausgewählten Koeffizienten den Index und den Wert aufweist.

11. Einrichtung zum Empfangen (CI') eines repräsentativen Datenstroms für eine Folge von holografischen Bildern im Hinblick auf ihre Wiedergabe an mindestens einen Beobachter auf einer holografischen Anzeigevorrichtung, **dadurch gekennzeichnet, dass** sie ein Empfangsmodul (MR') aufweist, das ausgebildet ist zum Empfangen der Lokalisierungsinformationen des mindestens einen Beobachters in einem Bezugssystem der holografischen Anzeigevorrichtung, eine Vorrichtung zum Decodieren (300) des Datenstroms nach Anspruch 10 und ein Modul zum Übertragen (MT) des wiederhergestellten Bildes an die Anzeigevorrichtung.

12. Signal, das eine erste Signalisierungsnachricht ($M_1$) trägt, die nach Anspruch 9 von einer Einrichtung zum Empfangen (CI) eines Datenstroms gesendet wird, der eine Folge von holografischen Bildern für eine Einrichtung zum Senden des Stroms codiert, **dadurch gekennzeichnet, dass** es repräsentative Informationen für eine Lokalisierung von mindestens einem Beobachter in einem Bezugssystem einer holografischen Anzeigevorrichtung aufweist, die an die Einrichtung zum Empfangen angeschlossen ist.

13. Signal, das eine zweite Signalisierungsnachricht (M2) trägt, die nach Anspruch 11 von einer Einrichtung zum Empfangen (CI') eines Datenstroms gesendet wird, der eine Folge von holografischen Bildern für eine Einrichtung zum Senden (Serv') des Stroms codiert, **dadurch gekennzeichnet, dass** es die Indizes der Gabor-Wavelet-Koeffizienten aufweist, die für die Codierung von mindestens einem Bild der Folge ausgewählt wurden.

14. Computerprogramm mit Anweisungen zum Umsetzen des Verfahrens zum Verarbeiten einer Folge von holografischen Bildern nach einem der Ansprüche 1 bis 6.

**Claims**

1. Method for processing a sequence of holographic images, with a view to playing it with a holographic display device (DAH) to at least one observer ($O_1$, $O_2$, $O_3$, $O_k$), **characterized in that**, for a holographic image decomposed in a Gabor-wavelet basis into a set of wavelet coefficients, the method comprises the following steps:

   - Obtaining (T1) information representative of the decomposition in the Gabor-wavelet basis;
   - Obtaining (T2) information (Iloc) representative of a location of said at least one observer in a frame of reference of the display device; the information representative of a location of said at least one observer comprising characteristic parameters of a connected and convex subset of positions of the observer, called the encompassing volume ($B_k$) ;

- Selecting (T3) a subset of wavelet coefficients depending on the obtained wavelet information and on the obtained location information, said step comprising the following substeps:

  - determining an angular direction of emission and an angular dispersion of a light cone produced by a Gabor wavelet ($\psi_i$) at a point (x,y) of the holographic image in a frame of reference of the display device;
  - identifying the cones (Cn$\psi_i$)) having a nonzero intersection with a least the encompassing volume ($B_k$) of said at least one observer ($O_k$) ;
  - selecting the wavelets ($\psi_i$) corresponding to the identified cones;

- encoding the selected coefficients.

2. Method for processing a sequence of holographic images according to Claim **1**, **characterized in that** the location information is received in a signalling message ($M_1$) emitted by an equipment (CI) arranged to determine said location information.

3. Method for processing a sequence of holographic images according to Claim **2**, **characterized in that** it comprises a step (T'4) of coding the wavelet coefficients using a zero-tree, in which step a wavelength coefficient is coded by an index representative of the wavelength in the wavelet basis and a value of the coefficient, and a step (T'5) of generating a datastream, comprising, for a selected coefficient, said index and said value.

4. Method for processing a sequence of holographic images according to Claim **3**, **characterized in that**, for a following image, the coded value of a selected coefficient comprises a variation with respect to the value coded for the preceding image.

5. Method for processing a sequence of holographic images according to Claim **1**, **characterized in that** it comprises a step (T"4) of emitting a signalling message (M2) comprising the indices of the selected wavelet coefficients to a server equipment (Serv') able to generate a datastream (Bts) coding said coefficients, and a step (T"5) of receiving the datastream coding the selected subset of wavelet coefficients coming from the server equipment (Serv).

6. Method for processing a sequence of holographic images according to Claim **5**, **characterized in that**, following the obtainment of new location information, the step (T"3) of selecting a subset of coefficients is repeated and **in that** the emitting step emits a new signalling message (M2) comprising the indices of the coefficients added to the subset and the indices of the coefficients removed from the subset.

7. Device (100) for processing a sequence of holographic images with a view to it being played on a holographic display device to at least one observer, **characterized in that** said device comprises the following units:

  - A unit for obtaining (GET wave) information representative of the decomposition in the Gabor-wavelet basis;
  - A unit for obtaining (GET loc) information representative of a location of said at least one observer in a frame of reference of the display device, the information representative of a location of said at least one observer comprising characteristic parameters of a connected and convex subset of positions of the observer, called the encompassing volume ($B_k$);
  - A unit for selecting (SEL coef) a subset of wavelet coefficients depending on the obtained wavelet information and on the obtained location information, said step comprising the following substeps:

    - determining an angular direction of emission and an angular dispersion of a light cone produced by a Gabor wavelet ($\psi_i$) at a point (x,y) of the holographic image in a frame of reference of the display device;
    - identifying the cones (Cn($\psi_i$)) having a nonzero intersection with a least the encompassing volume ($B_k$) of said at least one observer ($O_k$);
    - selecting the wavelets ($\psi_i$) corresponding to the identified cones.

8. Device (200) for coding a sequence of holographic images with a view to it being transmitted and it being played to at least one observer on a holographic display device, **characterized in that** it comprises a processing device (100) according to Claim 7 and **in that** it furthermore comprises the following units:

- a unit for coding (COD wave) the wavelet coefficients using a zero-tree, a wavelet coefficient being coded by an index representative of the wavelet in the wavelet basis and a value of the coefficient;
- a unit for generating (GEN Bts) a datastream comprising, for a selected coefficient, said index and said value.

**9.** Equipment (Serv) for emitting a datastream coding a sequence of holographic images, **characterized in that** it comprises a coding device (200) according to Claim **8**, an emitting module (ME) suitable for transmitting the datastream to a communication network and a receiving module (MR) able to receive a signal carrying a signalling message ($M_1$) comprising the location information (Iloc) of said at least one observer ($O_1$, $O_2$, $O_3$).

**10.** Device for decoding a holographic datastream representative of a holographic sequence of images with a view to it being played to at least one observer on a holographic display device, **characterized in that** it comprises a processing device according to Claim 7 and **in that** it furthermore comprises the following units:

- a unit for decoding the wavelet coefficients using a zero-tree, a wavelet coefficient being coded by an index representative of the wavelet in the wavelet basis and a value of the coefficient;
- a unit for reconstructing an image of the sequence, from the decoded coefficients comprising, for a selected coefficient, said index and said value.

**11.** Equipment (CI') for receiving a datastream representative of a sequence of holographic images with a view to it being played to at least one observer on a holographic display device, **characterized in that** it comprises a receiving module (MR') able to receive information on the location of said at least one observer in a frame of reference of the holographic display device, a device (300) for decoding the datastream according to Claim **10**, and a module (MT) for transmitting the reconstructed image to said display device.

**12.** Signal carrying a first signalling message ($M_1$) emitted, by an equipment (CI) for receiving a datastream coding a sequence of holographic images, to an equipment that emitted said flux and according to Claim **9**, **characterized in that** it comprises information representative of a location of at least one observer in a frame of reference of a holographic display device connected to said receiving equipment.

**13.** Signal carrying a second signalling message (M2) emitted, by an equipment (CI') according to Claim **11** for receiving a datastream coding a sequence of holographic images, to an equipment (Serv') that emitted said stream, **characterized in that** it comprises the indices of the Gabor-wavelet coefficients selected to code at least one image of said sequence.

**14.** Computer program comprising instructions for implementing the method for processing a sequence of holographic images according to one of Claims **1** to **6**.

FIG. 1

FIG. 2a

FIG. 2b

FIG. 3a

FIG. 3b

FIG. 5

FIG. 4

| T'0   Serv. | T'2 | N | R2 | Cl.   R1 |
|---|---|---|---|---|

GET
hologr.

GET loc

SEND loc

DET loc

M1

T'1

COD
wave

$I_m$

T'3

SELECT
coef

DISPLAY

R5

T'4

COD
coef

$I'_m$

REC
hologr.

R4

T'5

GEN Dbs

T'6

SEND Dbs

DEC
coef

R3

REC Dbs

R2

FIG. 6

**Serv.** | **N** | **Cl.**

E1 — GET hologr.

E2 — COD wavelet

E3 — SEND wavelet

T''1 — GET wave

T''2 — DET loc

T''8 — DISPLAY hologr.

E4 — COD coef

T''4 — SEND index

T''3 — SELECT coef

M2

T''7 — REC hologr.

T''6 — DEC coef

E5 — GEN Dbs

E6 — SEND Dbs

T''5 — REC Dbs

FIG. 7

FIG. 8

FIG. 9

FIG. 10

**EP 3 097 692 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- **SHORTT, A. N.** Compression of digital holograms of 3d objects using wavelets. *Optics Express,* 2006, 2625

- **SAID AMIR ; PEARLMAN WILLIAM.** A new, fast and efficient image codec based on set partitioning in hierarchical trees. *IEEE Transactions on Circuit and Systems for Video Technology,* Juin 1996, vol. 6 (3), 243-250